(19) Europäisches Patentamt
European Patent Office
Office européen des brevets

(11) **EP 3 812 171 A1**

(12) **EUROPEAN PATENT APPLICATION**
published in accordance with Art. 153(4) EPC

(43) Date of publication:
28.04.2021 Bulletin 2021/17

(51) Int Cl.:
**B60C 9/20** (2006.01)        **B60C 1/00** (2006.01)
**B60C 9/18** (2006.01)        **B60C 9/22** (2006.01)

(21) Application number: 19822639.1

(22) Date of filing: 14.06.2019

(86) International application number:
**PCT/JP2019/023762**

(87) International publication number:
**WO 2019/244807 (26.12.2019 Gazette 2019/52)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: 19.06.2018 JP 2018116393

(71) Applicant: **Bridgestone Corporation**
**Chuo-Ku**
**Tokyo 104-8340 (JP)**

(72) Inventor: **KATAYAMA, Masahiro**
**Tokyo 104-8340 (JP)**

(74) Representative: **Oxley, Robin John George**
**Marks & Clerk LLP**
**15 Fetter Lane**
**London EC4A 1BW (GB)**

(54) **TIRE**

(57)     A resin-covered cord provided at a tire is configured with plural arrayed reinforcing cords that are covered with a covering resin. A belt is configured with the resin-covered cord that is wound in a spiral pattern, and an array direction of the reinforcing cord is inclined with respect to a tire axial direction. Portions of the resin-covered cord that are adjacent to each other in the tire axial direction are joined together at mutual contact portions (joined portions).

FIG.6

**Description**

Technical Field

The present disclosure relates to a tire.

Background Art

Japanese Patent Application Laid-Open (JP-A) No. 2014-210487 discloses a tire with a configuration in which a reinforcing cord is covered in resin to form a reinforcing cord member, and the reinforcing cord member is wound onto an outer circumference of a tire frame member in a spiral pattern. This tire includes a belt configured by joining the reinforcing cord member that has been wound onto the outer circumference of the tire frame member in a spiral pattern to the outer circumference of the tire frame member, and joining together portions of the reinforcing cord member that are adjacent to each other in a tire axial direction.

SUMMARY OF INVENTION

Technical Problem

However, the reinforcing cord member in this related art has a rectangular cross-section profile, leaving room for further improvement with respect to the level of joining between mutually adjacent portions of the reinforcing cord member in the tire axial direction.

An object of the present disclosure is to improve the durability of a tire including a belt configured by winding a resin-covered cord in a spiral pattern.

Solution to Problem

A tire according to the present disclosure includes a belt joined to an outer circumference of a circular tire frame member, the belt being formed with a resin-covered cord that is wound in a spiral pattern, in a tire circumferential direction, onto the outer circumference of the tire frame member, and the resin-covered cord being configured by an arrangement of plural reinforcing cords that are covered with a thermoplastic resin. In a cross-section of the belt sectioned along a tire axial direction, the resin-covered cord is wound in the spiral pattern with an array direction of the reinforcing cords being inclined with respect to the tire axial direction, and portions of the inclined resin-covered cord that are adjacent to each other in the tire axial direction are welded together at mutual contact portions.

In the tire of the present disclosure, the belt is joined to the outer circumference of the circular tire frame member. The belt is formed by winding the resin-covered cord in a spiral pattern in the tire circumferential direction. The resin-covered cord is configured by the arrangement of the plural reinforcing cords that are covered with resin. In cross-section sectioned along the tire axial direction, the array direction of the reinforcing cords of resin-covered cord is inclined with respect to the tire axial direction.

Note that when due to arraying the plural reinforcing cords in the resin-covered cord, the tire axial direction cross-section profile of the resin-covered cord becomes longer in the array direction of the reinforcing cords. Inclining the array direction of the reinforcing cord of the resin-covered cord with respect to the tire axial direction enables the contact surface area between portions of the resin-covered cord adjacent to each other in the tire axial direction to be increased. This enables the level of joining between adjacent portions in the tire axial direction of the resin-covered cord of the belt to be improved, thus enabling the durability of the tire to be improved.

Advantageous Effects of Invention

The belt of the present disclosure, configured by winding the resin-covered cord in a spiral pattern, exhibits the advantageous effect of enabling the joining properties and thus the level of joining between the mutually adjacent portions in the tire axial direction of the resin-covered cord to be improved, thus enabling the durability of the tire to be improved.

BRIEF DESCRIPTION OF DRAWINGS

Fig. 1 is a schematic cross-section illustrating relevant portions of a tire according to a first exemplary embodiment, on one side of a tire equatorial plane.
Fig. 2 is a schematic diagram of relevant portions of a belt according to the first exemplary embodiment, as viewed along a length direction.
Fig. 3 is a cross-section of relevant portions of a belt provided to a tire, as sectioned along a tire axial direction.
Fig. 4 is a schematic diagram illustrating relevant portions in a winding process of a resin-covered cord.
Fig. 5 is a line graph illustrating changes in a weld ratio with respect to an angle of inclination of a belt.
Fig. 6 is a cross-section illustrating relevant portions of a belt according to a second exemplary embodiment.

DESCRIPTION OF EMBODIMENTS

Detailed explanation follows regarding exemplary embodiments of the present invention, with reference to the drawings.
A tire according to the present disclosure includes a belt joined to an outer circumference of a circular tire frame member, the belt being formed by winding a resin-covered cord onto the outer circumference of the tire frame member in a tire circumferential direction so as to form a spiral pattern, and the resin-covered cord being configured by an arrangement of plural reinforcing cords that are covered with a resin. In a cross-section of the belt as sectioned along a tire axial direction, the resin-covered cord is wound in a spiral pattern such that an array direction of the reinforcing cords is inclined with respect to the tire axial direction, and portions of the inclined resin-covered cord that are adjacent to each other in the tire axial direction are joined together at a mutual contact portion.

In the tire according to the present disclosure, in a cross-section of the resin-covered cord sectioned along the tire axial direction, an obtuse angle-side angle of the incline of a face on the tire frame member side of the resin-covered cord with respect to the array direction of the reinforcing cords is an angle configuring a supplementary angle to an acute angle-side angle of the array direction of the reinforcing cords with respect to the tire axial direction.

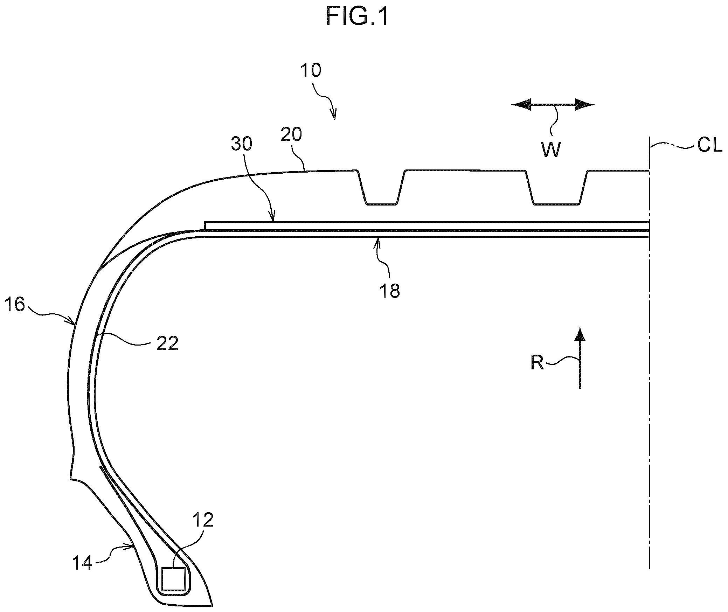

In the present exemplary embodiment, explanation follows regarding an example of a tire 10 serving as a pneumatic tire according to the present disclosure. Fig. 1 is a schematic cross-section illustrating relevant portions of the tire 10 according to the present exemplary embodiment on one side of a tire equatorial plane CL. In the drawings, the arrow R indicates a tire radial direction, the arrow W indicates the tire axial direction (also referred to as the tire width direction), and the reference numeral CL indicates the tire equatorial plane.

In the present exemplary embodiment, the tire axial direction refers to a direction running parallel to a tire rotation axis, and corresponds to the tire width direction. In the present exemplary embodiment, a side further from the tire equatorial plane CL in the tire axial direction is referred to as the tire axial direction outer side, and a side closer to the tire equatorial plane CL in the tire axial direction is referred to as the tire axial direction inner side. In the present exemplary embodiment, the tire radial direction is a direction that intersects the tire axial direction. A side further away from the tire rotation axis in the tire radial direction is referred to as the tire radial direction outer side, and a side closer to the tire rotation axis in the tire radial direction is referred to as the tire radial direction inner side. In the exemplary embodiments, the tire circumferential direction refers to a rotation direction centered on the tire rotation axis.

The dimension measurement methods for the various sections are the methods defined in the 2018 Year Book issued by the Japan Automobile Tire Manufacturers Association (JATMA). In cases in which TRA standards or ETRTO standards apply in the location of use or manufacture, then the applicable standards are adhered to.

First Exemplary Embodiment

The tire 10 according to a first exemplary embodiment is what is referred to as a radial tire and is employed in a passenger car or the like. As illustrated in the example in Fig. 1, the tire 10 includes a pair of bead portions 14 each embedded with an annular bead core 12, side portions 16 continuing toward the tire radial direction outer side from the respective bead portions 14, and a crown portion 18 that couples together the side portions 16 on both sides in the tire width direction (tire axial direction).

Each of the bead cores 12 is configured by a bead cord (not illustrated in the drawings). The bead cord is configured of a metal cord such as a steel cord, an organic fiber cord, a resin-covered organic fiber cord, a hard resin, or the like. Note that the bead core 12 may be omitted from the bead portion 14 if the rigidity of the bead portion 14 can be sufficiently secured.

Each of the side portions 16 forms a portion at the side of the tire 10, and is applied with a gentle convex curve toward the tire axial direction outer side from the bead portion 14 toward the crown portion 18. A tread 20 is laid at the tire radial direction outer side of the tire 10. The crown portion 18 configures a portion to support the tread 20.

A carcass ply 22 that is wrapped around the respective bead cores 12 straddles between the pair of bead portions 14. The carcass ply 22 is an example of a tire frame member, and is for example configured by cords (not illustrated in the drawings) arrayed in the tire circumferential direction and covered with rubber. Note that the tire frame member is not limited to the carcass ply 22, and a member configured of a resin material may be employed. A reinforcing material (such as a polymer material, metal fibers, cord, non-woven fabric, or woven fabric) may be embedded in a resin tire frame member as appropriate.

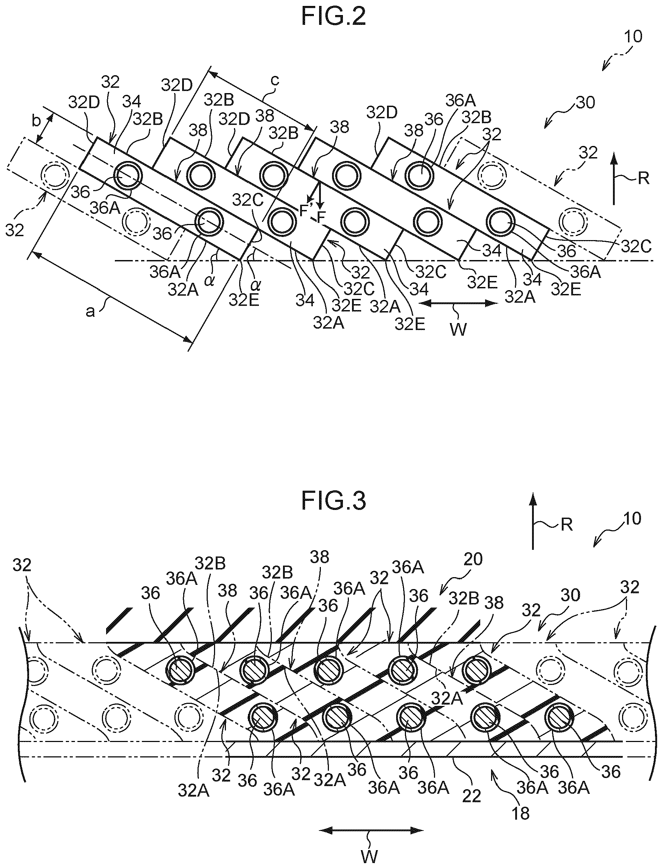

The tire 10 includes an annular belt 30, serving as a reinforcing member. Fig. 2 is a schematic configuration diagram of relevant portions of the belt 30 according to the first exemplary embodiment, as viewed along a length direction thereof. Fig. 3 is an enlarged cross-section of relevant portions of the tire 10 in Fig. 1 as sectioned along the tire axial direction.

As illustrated in Fig. 1 and Fig. 3, the belt 30 is laid around an outer circumference of the carcass ply 22. The belt 30 is joined to the outer circumference of the carcass ply 22 at the crown portion 18. The tread 20 is joined to the tire radial direction outer side of the belt 30 through non-illustrated cushioning rubber.

As illustrated in Fig. 2, resin-covered cord 32 is employed in the belt 30. The resin-covered cord 32 is formed by covering reinforcing cords 36 with covering resin 34 such that the reinforcing cords 36 are fully enclosed within the covering resin 34. A monofilament (single strand) metal fiber, organic fiber, or the like, or a multifilament (twisted strands) configured by twisting fibers together is employed for each of the reinforcing cords 36. Plural of the reinforcing cords 36 are arrayed within the resin-covered cord 32. An adhesive resin layer 36A is provided at an outer periphery of each of the reinforcing cords 36. The reinforcing cord 36 is joined to the covering resin 34 through the adhesive resin layer 36A, thereby suppressing slippage of the reinforcing cords 36 with respect to the covering resin 34.

As an example, a thermoplastic resin (including thermoplastic elastomers), serving as a resin material, is employed as the covering resin 34 of the resin-covered cord 32. The resin material employed for the covering resin 34 is not limited to a thermoplastic elastomer, and in addition to thermoplastic resins, thermosetting resins, and other general-purpose resins, engineering plastics (including super engineering plastics) or the like may be employed as the resin material.

Thermoplastic resins (including thermoplastic elastomers) are polymer compounds of materials that soften and flow with increased temperature, and that adopt a relatively hard and strong state when cooled. In the first exemplary embodiment, out of these, polymer compounds forming materials that soften and flow with increasing temperature, that adopt a relatively hard and strong state on cooling, and that have a rubber-like elasticity are considered to be thermoplastic elastomers. Polymer compounds forming materials that soften and flow with increasing temperature, that adopt a relatively hard and strong state on cooling, and do not have a rubber-like elasticity are considered to be non-elastomer thermoplastic resins, these being distinct from thermoplastic elastomers.

Examples of thermoplastic resins (including thermoplastic elastomers) include thermoplastic polyolefin-based elastomers (TPO), thermoplastic polystyrene-based elastomers (TPS), thermoplastic polyamide-based elastomers (TPA), thermoplastic polyurethane-based elastomers (TPU), thermoplastic polyester-based elastomers (TPC), and dynamically crosslinking-type thermoplastic elastomers (TPV), as well as thermoplastic polyolefin-based resins, thermoplastic polystyrene-based resins, thermoplastic polyamide-based resins, and thermoplastic polyester-based resins.

For example, a material with deflection temperature under load (namely under a load of 0.45 MPa) as defined in ISO 75-2 and ASTM D648 of 78°C or above, a tensile yield strength as defined in JIS K7113 of 10 MPa or above, a tensile elongation at break as also defined in JIS K7113 of 50% or above (see JIS K7113), and a Vicat softening temperature as defined in JIS K7206 (method A) of 130°C may be employed as the above thermoplastic material.

The tensile elastic modulus (as defined in JIS K7113: 1995) of the covering resin 34 that covers the reinforcing cords 36 is preferably no less than 100 MPa. An upper limit of the tensile elastic modulus of the covering resin 34 is preferably no greater than 1000 MPa. Note that the tensile elastic modulus of the covering resin 34 that covers the reinforcing cords 36 is preferably between 200 MPa and 700 MPa.

Thermosetting resins are curable polymer compounds that form a three-dimensional mesh structure with increasing temperature. Examples of thermosetting resins include phenolic resins, epoxy resins, melamine resins, and urea resins. Note that in addition to the thermoplastic resins (including thermoplastic elastomers) or thermosetting resins such as those described above, a general purpose resin such as a (meth) acrylic-based resin, an EVA resin, a vinyl chloride resin, a fluorine-based resin, or a silicone-based resin may be employed as the resin material.

In the first exemplary embodiment, two of the reinforcing cords 36 are employed in the resin-covered cord 32 as an example. In cross-section sectioned along the tire radial direction, the resin-covered cord 32 has a substantially rectangular (substantially elongated) profile with its length in an array direction of the reinforcing cords 36 (illustrated by a single-dotted dashed line in Fig. 2). A thickness dimension of the resin-covered cord 32 configuring the belt 30 (a thickness dimension in a direction intersecting the array direction of the reinforcing cords 36) is preferably greater than a diameter dimension of the reinforcing cords 36. In other words, the reinforcing cords 36 are preferably completely embedded in the covering resin 34. Specifically, in cases in which the tire 10 is to be employed in a passenger car, the thickness dimension of the resin-covered cord 32 is preferably no less than 0.700 mm.

In the resin-covered cord 32 of the first exemplary embodiment, a width a, this being the length of side faces 32A, 32B along the array direction is longer (greater) than a thickness b configuring the lengths of side faces 32C, 32D on both sides in the array direction of the resin-covered cord 32 (a > b). The resin-covered cord 32 is for example configured such that the width a is 5.0 mm and the thickness b is 2.0 mm.

Note that the spacing between the reinforcing cords 36 in the resin-covered cord 32 is set to a spacing that obtains a desired strength. The reinforcing cords 36 in the resin-covered cord 32 are covered by the covering resin 34 at a covering thickness that obtains a desired strength, and the width a and the length b of the resin-covered cord 32 are set such that the desired strength of the resin-covered cord 32 is obtained.

In cross-section of the resin-covered cord 32 as sectioned along the tire axial direction, the array direction of the reinforcing cords 36 is a direction running parallel to a line linking the centers of the two reinforcing cords 36. Note that in cases in which three or more of the reinforcing cords 36 are employed, the reinforcing cords 36 are arrayed such that the respective centers thereof are on substantially the same straight line, and the array direction is a direction running substantially parallel to a line linking the centers of the respective reinforcing cords 36.

The belt 30 is formed in an annular shape by winding the elongated resin-covered cord 32 in a spiral pattern. The belt 30 is welded together at a joined portions 38, this being a portion where mutually adjacent portions of the resin-covered cord 32 in the tire axial direction contact each other (a contact portion).

Note that in the resin-covered cord 32, the array direction of the reinforcing cords 36 is inclined by an acute angle $\alpha$ with respect to one side in the tire axial direction, such that the array direction of the reinforcing cords in the resin-covered cord 32 is inclined with respect to the tire radial direction by the angle of inclination (angle) $\alpha$ on the one side in the tire axial direction. The resin-covered cord 32 is wound around the outer circumference of the carcass ply 22 in a state in which the array direction of the reinforcing cords 36 is tilted by the angle of inclination $\alpha$ with respect to the one side in the tire axial direction ($0° < \alpha < 90°$). In other words, in the resin-covered cord 32, one out of the side faces 32A, 32B running along the array direction of the reinforcing cords 36 (for example the side face 32A) faces toward the tire radial direction inner side, and this side face 32A is inclined by the angle of inclination $\alpha$ with respect to the tire axial direction and faces toward the tire axial direction outer side.

Thus, in a cross-section in the tire axial direction of the belt 30, the resin-covered cord 32 is arrayed along the tire axial direction in an oblique overlapping state, such that the array directions of the reinforcing cords 36 lie substantially parallel to each other. In the cross-section in the tire axial direction of the belt 30, the plural portions of the resin-covered cord 32 are stacked at an incline. In the belt 30, the positions of respective corners (inner side corners in the tire radial direction) 32E between the side face 32A and the side face 32C of the stacked resin-covered cord 32 preferably lie along a substantially straight line running parallel to the tire axial direction.

The joined portion 38 is configured by an overlapping portion between the side face 32B of one location of the resin-covered cord 32 and the side face 32A of another location of resin-covered cord 32 adjacent in the tire axial direction when the resin-covered cord 32 has been wound in a spiral pattern. In tire axial direction cross-section, a length c of the joined portion 38 is determined by the width a and the thickness b of the resin-covered cord 32, as well as the angle of inclination $\alpha$ of the resin-covered cord 32 with respect to the tire axial direction. In the first exemplary embodiment, the angle of inclination $\alpha$ of the resin-covered cord 32 is set such that the length c of the joined portion 38 in tire axial direction cross-section is greater than the thickness b of the resin-covered cord 32 ($c > b$, wherein, $c = a - (b/\tan\alpha)$).

The belt 30 is joined to the outer circumference of the carcass ply 22 at the crown portion 18. During joining of the belt 30 to the carcass ply 22, the covering resin 34 of the resin-covered cord 32 is melted and pressed against the carcass ply 22 while being wound on in a spiral pattern. Thus, as illustrated in Fig. 3, in the belt 30 of the tire 10, a space between the side face 32C of the resin-covered cord 32 and the side face 32A of the resin-covered cord 32 adjacent to this resin-covered cord 32, and a space between the side face 32D of the resin-covered cord 32 and the side face 32B of the resin-covered cord 32 adjacent to this resin-covered cord 32, are respectively filled by the molten covering resin 34. A face at a carcass ply 22-side and a face at a tread 20-side of the belt 30 of the tire 10 are thus both configured with substantially flat profiles.

Operation

In the tire 10, the belt 30 is joined to the outer circumference of the carcass ply 22 of the crown portion 18, namely in the belt 30, the resin-covered cord 32 that has been wound onto the outer circumference of the carcass ply 22 in a spiral pattern is melted and joined to the carcass ply 22.

In the first exemplary embodiment, two of the reinforcing cords 36 are arrayed in the resin-covered cord 32. The resin-covered cord 32 is inclined such that a length direction in the cross-section corresponding to the array direction of the reinforcing cords 36 is inclined with respect to the tire axial direction. In the belt 30, mutually adjacent portions of the resin-covered cord 32 in the tire axial direction are welded together at the joined portion 38.

Thus, in the resin-covered cord 32, the length c of the joined portion 38 where adjacent portions of the resin-covered cord 32 are welded together is greater than the thickness b of the resin-covered cord 32 ($c > b$), such that the resin-covered cord 32 has a wide contact surface area at the joined portion 38. This improves the level of joining of the belt 30 in comparison to cases in which the length direction of the resin-covered cord 32 (the array direction of the reinforcing cords 36) is set along the tire axial direction.

Moreover, the belt 30 employs the resin-covered cord 32 in which the two reinforcing cords 36 are disposed, and the resin-covered cord 32 is wound on such that the array direction of the reinforcing cords 36 is inclined with respect to the tire axial direction. This enables the number of circuits of the resin-covered cord 32 in the tire axial direction, namely the number of reinforcing cords 36 in the belt 30, to be increased in comparison to cases in which the array direction of the reinforcing cords 36 is set along the tire axial direction. In addition thereto, in the belt 30, the resin-covered cord 32 in which the two reinforcing cords 36 are arrayed is wound on such that the array direction of the reinforcing cords 36 is inclined with respect to the tire axial direction. The reinforcing cords 36 are thus laid in two tiers, namely at the tire radial direction inner side and the tire radial direction outer side of the belt 30.

This raises the in-plane shear rigidity of the belt 30 (in an annular plane extending in the tire circumferential direction and the tire width direction), enabling the steering stability afforded by the belt 30 when a vehicle travels on the tire 10 to be improved.

The belt 30 of the tire 10 is formed in this manner by winding the resin-covered cord 32 with the array direction of the reinforcing cords 36 inclined with respect to the tire axial direction when the belt 30 is laid on the outer circumference of the carcass ply 22, thus improving the level of joining. The durability of the belt 30 is therefore improved, thus also improving the durability of the tire 10.

Belt Manufacture

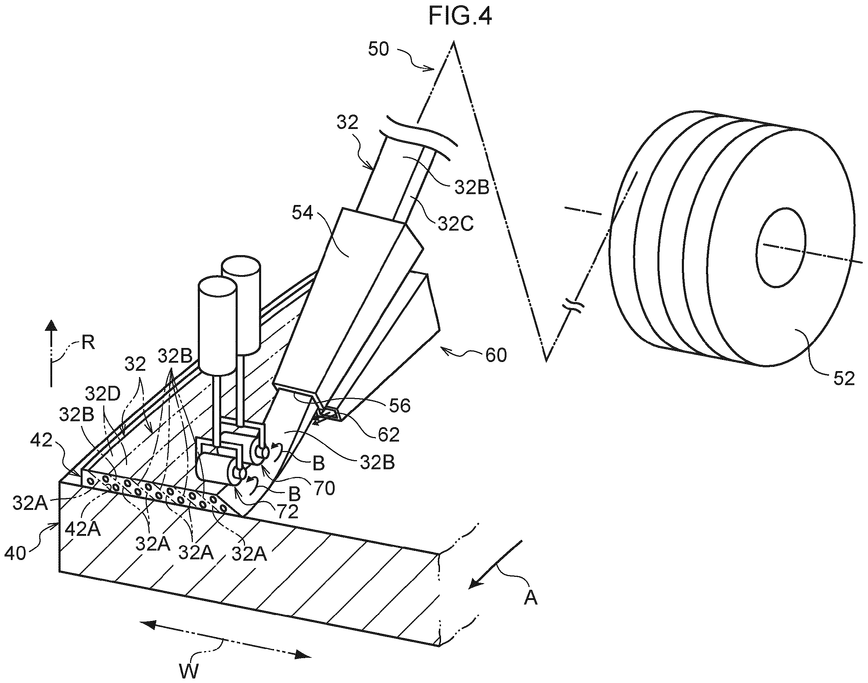

Next, explanation follows regarding manufacture of the annular belt 30. Fig. 4 is a schematic configuration diagram illustrating relevant portions in a manufacturing process of the belt 30 according to the first exemplary embodiment.

As illustrated in Fig. 4 as an example, an annular (drum shaped) core 40 is employed in the manufacture of the belt 30. An outer circumference of the core 40 configures a winding surface 40A for the resin-covered cord 32. The outer circumference (winding surface 40A) of the core 40 is for example configured from metal. The outer circumference of the core 40 may have a linear cross-section profile or a curved cross-section profile along the axial direction, or may have a combination of a linear cross-section profile section and a curved cross-section profile section.

The outer circumference of the core 40 is divisible at plural circumferential direction locations, and each of the divided outer circumferential portions is capable of moving so as to retreat toward the radial direction inner side. This allows removal of the annular belt 30 formed on the outer circumference of the core 40 from the core 40.

A support device (not illustrated in the drawings) that rotatably supports the core 40 is employed when winding the resin-covered cord 32 onto the outer circumference of the core 40. The resin-covered cord 32 is wound using a cord supply device 50 that supplies the resin-covered cord 32 at the vicinity of the outer circumference of the core 40, a heating device 60 that heats the resin-covered cord 32, a press roller 70 serving as a pressing implement, a cooling roller 72 serving as a cooling implement, and the like.

The cord supply device 50 is configured including a reel 52 on which the resin-covered cord 32 is taken up, and a guide member 54 with a tubular internal portion through which the resin-covered cord 32 is able to pass. An opening 56 facing toward the outer circumference of the core 40 is formed in the guide member 54. In the cord supply device 50, the resin-covered cord 32 is pulled out from the reel 52 and guided by passing through the tubular internal portion of the guide member 54. The resin-covered cord 32 is then fed out through the opening 56 toward the outer circumference of the core 40 while imparting the resin-covered cord 32 with a predetermined tension.

During manufacture of the belt 30, the resin-covered cord 32 is fed onto the outer circumference of the core 40 by the cord supply device 50 while the core 40 is being rotated by the support device, such that the resin-covered cord 32 is wound onto the outer circumference of the core 40. When this is performed, the core 40 and the opening 56 in the cord supply device 50 (guide member 54) are moved relative to one another in the tire axial direction, causing the resin-covered cord 32 to be wound onto the outer circumference of the core 40 in a spiral pattern. Note that this relative movement between the core 40 and the opening 56 in the guide member 54 is for example performed by moving the core 40 along the tire axial direction.

The heating device 60 for example heats air using a heating element (not illustrated in the drawings) while using a fan (not illustrated in the drawings) to cause the heated air to flow to generated a heated airflow, and the heated airflow thus generated is blown out through a blower outlet 62. The blower outlet 62 of the heating device 60 is disposed so as to face between the resin-covered cord 32 already wound onto the core 40 and a core 40-side face of the resin-covered cord 32 still being supplied to the core 40. The heated airflow is blown against the resin-covered cord 32 through the blower outlet 62 of the heating device 60 so as to melt the covering resin 34.

Note that the heating device 60 is not limited to a configuration employing a heating element and a fan. Any configuration capable of heating and melting the thermoplastic resin may be applied, for example a configuration in which a heating iron contacts the location to be melted (covering resin 34) such that the contact portion is heated and melted in this manner. Alternatively, the heating device 60 may employ radiant heat to heat and melt the location to be melted, or infrared light may be shone onto the location to be melted so as to heat and melt this location.

The press roller 70 presses the resin-covered cord 32 to be wound onto the core 40 and the resin-covered cord 32 that has already been wound onto the core 40 against the outer circumference of the core 40 with a pressing force F. The cooling roller 72 is disposed further toward a rotation direction downstream side of the core 40 than the press roller 70. The cooling roller 72 presses the resin-covered cord 32 that has been wound onto the outer circumference of the core 40 against the outer circumference of the core 40 following on from the press roller 70. A liquid cooling source (for example a coolant such as water) flows through the inside of the cooling roller 72, such that heat exchange takes place between the liquid cooling source and the resin-covered cord 32 when the roller surface of the cooling roller 72 contacts the resin-covered cord 32.

Note that the press roller 70 and the cooling roller 72 are capable of rotating freely, and undergo following rotation (rotation in the arrow B direction) with respect to the rotation direction of the core 40 (the arrow A direction) when pressed against the resin-covered cord 32. The roller surfaces of the press roller 70 and the cooling roller 72 are treated so as to prevent molten resin material (covering resin 34) from adhering thereto. An outer circumferential portion of the press roller 70 is preferably capable of elastic deformation, and the pressing force F of the press roller 70 and the cooling roller 72 against the resin-covered cord 32 is preferably adjustable.

The resin-covered cord 32 that has been wound onto the core 40 and pressed by the press roller 70 is thus cooled by the cooling roller 72. Note that the cooling roller 72 may be omitted in cases in which the molten resin material (the covering resin 34 of the resin-covered cord 32) is allowed to cool naturally.

The resin-covered cord 32 of the belt 30 is inclined at the angle of inclination $\alpha$ when being wound onto the outer circumference of the core 40 in a spiral pattern. Where the resin-covered cord 32 freshly wound onto the outer circumference of the core 40 meets the resin-covered cord 32 that has already been wound onto the core 40, the press roller 70 and the cooling roller 72 straddle between and press both the freshly wound resin-covered cord 32 and the adjacent resin-covered cord 32. Namely, the press roller 70 and the cooling roller 72 are disposed so as to straddle between two corners of the resin covered cord 32 (corners between the respective side faces 32B and side faces 32D), namely a corner of the resin-covered cord 32 being wound onto the core 40 and a corner of the wound resin-covered cord 32 adjacent to this resin-covered cord 32. By pressing against these two corners of the resin covered cord 32, these two portions of the resin covered cord 32 are pressed against the core 40. When this is performed, the outer circumferential portion of the press roller 70 undergoes elastic deformation, enabling the resin covered cord 32 to be pressed such that portions of the resin covered cord 32 on the opposite side to the core 40 become substantially flat.

Note that as an example, a lead cord 42 serving as a guiding member is employed when manufacturing the belt 30. One or plural of the reinforcing cords 36 are provided in the lead cord 42. The reinforcing cord(s) 36 in the lead cord 42 are covered by covering resin 34.

One end side in a length direction of the lead cord 42 has a substantially triangular cross-section profile as sectioned along the tire axial direction. A face (upper base) of the lead cord 42 on the opposite side to the core 40 has a width dimension that increases on progression from the one length direction end side toward the other length direction end side, such that the lead cord 42 has a substantially trapezoidal cross-section profile along most of its length in the tire axial direction. The length of the lead cord 42 is substantially equivalent to the length of one circuit of the outer circumference of the core 40 (the length of one circuit of the belt 30 or very slightly shorter than this length), and a support face 42A on the tire axial direction inner side of the lead cord 42 is inclined by the angle of inclination $\alpha$ with respect to the tire axial direction.

An end portion at the other end side in the length direction of the lead cord 42 has a profile combining the triangular profile of the leading end side and a part of the cross-section of the resin-covered cord 32 inclined at the angle of inclination $\alpha$ (a central portion of the resin-covered cord 32 cross-section excluding the corner 32E and a corner on the opposite side to the corner 32E, not illustrated in the drawings).

During manufacture of the belt 30, first, the lead cord 42 is wound onto an axial direction end portion of the outer circumference of the core 40. The position of the lead cord 42 on the belt 30 is a position on the carcass ply 22 of the tire 10 corresponding to one end side in the tire axial direction of the belt 30. Note that although the lead cord 42 is employed as an example in the first exemplary embodiment, a leading end portion of the resin-covered cord 32 may be processed into a profile similar to that of the lead cord 42.

During winding of the resin-covered cord 32 onto the outer circumference of the core 40, the core 40 that is attached to the support device is rotated in the arrow A direction, and the resin-covered cord 32 is pulled out from the reel 52 of the cord supply device 50 and fed out through the opening 56 toward the outer circumference of the core 40. As this is performed, a leading end of the resin-covered cord 32 is pressed against a trailing end of the lead cord 42, and the side face 32A of the leading end portion of the resin-covered cord 32 is overlaid on the support face 42A of the lead cord 42. The resin-covered cord 32 is thus wrapped onto the outer circumference of the core 40 in a spiral pattern with the side face 32A inclined at the angle of inclination $\alpha$ with respect to the rotation axis of the core 40.

In addition, the heated airflow is blown out through the blower outlet 62 of the heating device 60 so as to heat the side face 32B of the resin-covered cord 32 wound onto the core 40 (the support face 42A of the lead cord 42 initially) and the side face 32A of the resin-covered cord 32 being freshly wound onto the core 40. While the covering resin 34 is being melted, the resin-covered cord 32 being freshly wound onto the core 40 and the resin-covered cord 32 adjacent to this resin-covered cord 32 (already wound onto the core 40) are pressed by the press roller 70. When this is performed, the cord supply device 50 imparts tension to the resin-covered cord 32, which is fed from the cord supply device 50 to the outer circumference of the core 40, in order to suppress slippage of the resin-covered cord 32 in an axial direction of the core 40.

The resin-covered cord 32 is thus wound onto the outer circumference of the core 40 in a spiral pattern in a state in which the array direction of the reinforcing cords 36 is inclined by the angle of inclination $\alpha$ with respect to the outer circumference of the core 40 (the axial direction of the core 40). The heated airflow from the blower outlet 62 of the heating device 60 is blown between side faces of the resin-covered cord 32 as they are being wound onto the core 40 so as to melt the covering resin 34 and weld the resin covered cord 32 together at the joined portion 38.

Moreover, the molten covering resin 34 of the resin-covered cord 32 is pressed at the pressing force F by the press roller 70 at a portion contacted by the press roller 70 and a portion on the side of the core 40. Thus, in the resin-covered cord 32 that has been wound onto the outer circumference of the core 40, the covering resin 34 is melted at a corner on the side of the outer circumference of the core 40 (the corner 32E) and a corner on the opposite side to the outer circumference of the core 40, such that a gap between the covering resin 34 and the outer circumference of the core 40 and a gap between the covering resin 34 and the press roller 70 are filled by the molten covering resin 34. A face of the belt 30 on the side of the outer circumference of the core 40 and a face of the belt 30 on the opposite side to the outer circumference of the core 40 are thus both formed substantially flat.

The resin-covered cord 32 is then cooled and set by pressing with the cooling roller 72. The belt 30 is accordingly manufactured by winding the resin-covered cord 32 onto the outer circumference of the core 40 in a spiral pattern in this manner. The manufactured belt 30 is then removed from the core 40 and pressure-welded to the outer circumference of the carcass ply 22 in a vulcanization process or the like to manufacture the tire 10.

In the manufactured belt 30, the array direction of the reinforcing cords 36 is inclined at the fixed angle of inclination α with respect to the tire axial direction such that the resin-covered cord 32 overlaps itself in the tire axial direction, and adjacent portions of the resin covered cord 32 are welded together at the joined portion 38.

Note that during manufacture of the belt 30, the tension of the resin-covered cord 32 supplied to the core 40 may be adjusted by applying a brake to the reel 52 of the cord supply device 50, by providing a tension adjustment roller (not illustrated in the drawings) on a guidance path of the resin-covered cord 32, or the like. This enables snaking or the like of the resin-covered cord 32 as it is being wound onto the core 40 to be suppressed, enabling a high quality belt 30 to be manufactured in which the resin-covered cord 32 is wound on in a spiral pattern at a uniform pitch.

Although the core 40 is employed during manufacture of the belt 30, the carcass ply 22 may be employed instead of the core 40, such that the belt 30 is manufactured by winding the resin-covered cord 32 onto the outer circumference of the carcass ply 22 in a spiral pattern. In such cases, the carcass ply 22 is attached to a support device, and the resin-covered cord 32 is wound onto the outer circumference of the carcass ply 22 in a spiral pattern while rotating the carcass ply 22. This enables the belt 30 to be manufactured while joining the resin-covered cord 32 to the outer circumference of the carcass ply 22.

Note that the joining properties of the resin-covered cord 32 at the joined portion 38 are affected by the weld strength of the covering resin 34 at the joined portion 38. The weld strength is affected by the contact surface area of the resin-covered cord 32 at the joined portion 38, and by a pressing force F' (see Fig. 2) acting perpendicularly to contacting faces (side faces 32A, 32B) at the joined portion 38 (for example, weld strength = contact surface area × pressing force).

In the belt 30, the resin-covered cord 32 is inclined at the angle of inclination α, such that the length c of the joined portion 38 along the width direction of the resin-covered cord 32 is longer than the thickness b, and the contact surface area is larger than it would be in a case in which the side faces 32C, 32D were welded together, thereby improving the weld strength.

During manufacture of the belt 30, when the resin-covered cord 32 is pressed against the core 40 at the pressing force F (see Fig. 2), a pressing force F' acting perpendicularly to the contacting faces (side faces 32A, 32B) at the joined portion 38 is F' = cosα. The contact surface area of the resin-covered cord 32 is determined by the length c of the joined portion 38. A weld strength of the resin-covered cord 32 may be expressed as below.

$$\text{weld strength} = (a - (b/\tan\alpha)) \cdot F \cdot \cos\alpha$$

Thus, increasing the pressing force F enables the weld strength to be improved proportionately to the pressing force F, thereby enabling joining properties of the resin-covered cord 32 to be improved.

When a weld ratio Rw is defined as a proportion (ratio) of the weld strength of the joined portion 38 with respect to the pressing force F during manufacture of the belt 30, the weld ratio Rw may be obtained as below.

$$\text{Rw} = (a - (b/\tan\alpha)) \cdot \cos\alpha$$

Increasing the weld ratio Rw enables the weld strength of the resin-covered cord 32 to be effectively improved.

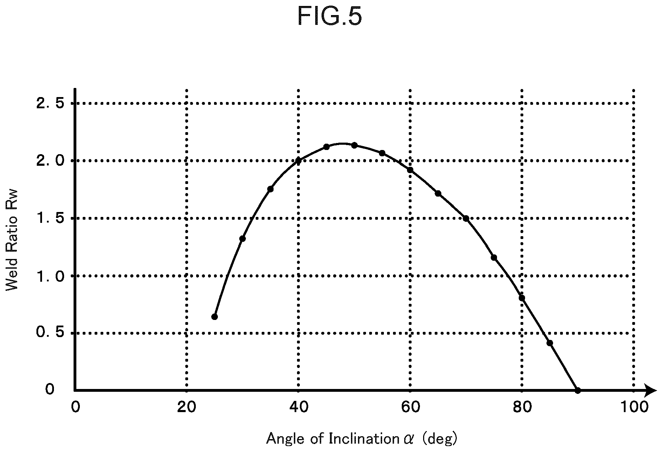

Table 1 illustrates changes in the weld ratio Rw with respect to the angle of inclination α. Fig. 5 is a line graph illustrating changes in the weld ratio Rw with respect to the angle of inclination α based on Table 1. In Table 1, a resin-covered cord 32 with width a = 5 mm and thickness b = 2 mm is applied as an example.

Table 1

| Angle of inclination | | Weld ratio (Rw) |
|---|---|---|
| α (deg) | α (rad) | |
| 0.0 | 0.0 | |
| 5.0 | 0.1 | |
| 10.0 | 0.2 | |
| 15.0 | 0.3 | |
| 20.0 | 0.3 | |
| 25.0 | 0.4 | 0.6 |

(continued)

| Angle of inclination | | Weld ratio (Rw) |
|---|---|---|
| α (deg) | α (rad) | |
| 30.0 | 0.5 | 1.3 |
| 35.0 | 0.6 | 1.8 |
| 40.0 | 0.7 | 2.0 |
| 45.0 | 0.8 | 2.1 |
| 50.0 | 0.9 | 2.1 |
| 55.0 | 1.0 | 2.1 |
| 60.0 | 1.0 | 1.9 |
| 65.0 | 1.1 | 1.7 |
| 70.0 | 1.2 | 1.5 |
| 75.0 | 1.3 | 1.2 |
| 80.0 | 1.4 | 0.8 |
| 85.0 | 1.5 | 0.4 |
| 90.0 | 1.6 | 0.0 |

As illustrated in Table 1 and in Fig. 5, the weld ratio Rw never falls below 1.3 in a range in which the angle of inclination α is between 30° and 70° (30° ≤ α ≤ 70°), and so the weld strength at the joined portion 38 is effectively improved in accordance with the pressing force F, and the joining properties of the resin-covered cord 32 are improved.

When the resin-covered cord 32 is overlaid on itself at the joined portion 38, a contact surface area of the resin-covered cord 32 can be increased by making the length c greater than the thickness b of the resin-covered cord 32. For example, in order to make the length c of the joined portion 38 greater than the thickness b in a case in which the resin-covered cord 32 has width a = 5 mm and thickness b = 2mm, then α > 33.7° (wherein $\tan^{-1}(\alpha) > (b/(a - b))$. In this example, setting the angle of inclination α between 33.7° and 70° enables the joining properties of the resin-covered cord 32 of the belt 30 to be effectively improved, thus enabling a high level of joining to be obtained.

The joining properties of the resin-covered cord 32 of the belt 30 can thus be improved by setting the angle of inclination α such that the length c of the joined portion 38 is greater (longer) than the thickness b of the resin-covered cord 32. In addition, by setting the angle of inclination α in the belt 30 from 30° to 70°, weld strength of the resin-covered cord 32 can be effectively improved, joining properties of the resin-covered cord 32 can be effectively improved, and the durability of the tire 10 can be effectively improved.

Second Exemplary Embodiment

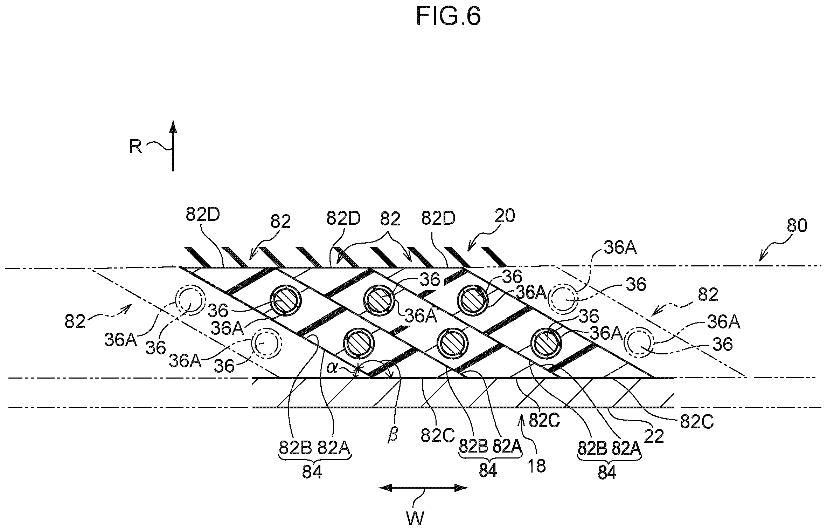

Next, explanation follows regarding a second exemplary embodiment. Fig. 6 is a cross-section illustrating relevant portions of a belt 80 according to the second exemplary embodiment, sectioned along a direction corresponding to the tire axial direction. The belt 80 of the second exemplary embodiment is employed in the tire 10 in place of the belt 30 of the first exemplary embodiment, and is laid at the outer circumference of the carcass ply 22 of the tire 10.

As illustrated in Fig. 6, a resin-covered cord 82 is employed in the belt 80 in place of the resin-covered cord 32 of the first exemplary embodiment. The belt 80 is formed by winding the resin-covered cord 82 in a spiral pattern.

Plural reinforcing cords 36 are arrayed in the resin-covered cord 82. In the second exemplary embodiment, two of the reinforcing cords 36 are employed as an example, and the reinforcing cords 36 are covered by covering resin 34. In cross-section profile sectioned along a direction corresponding to the tire axial direction, the resin-covered cord 82 has an elongated rectangular profile in which at least a pair of side faces 82A, 82B running in an array direction of the reinforcing cords 36 are substantially parallel to each other, and the lengths of the side faces 82A, 82B are longer than the lengths of other side faces 82C, 82D.

When being wound in a spiral pattern, the array direction of the reinforcing cords 36 in the resin-covered cord 82 is inclined by an acute angle of inclination α with respect to the tire axial direction. Specifically, in the resin-covered cord 82, one out of the side faces 82A, 82B (for example the side face 82A) that run along the array direction of the reinforcing cords 36 faces toward the tire radial direction inner side, and this side face 82A is inclined by the angle of inclination α with respect to the tire axial direction and faces toward the tire axial direction outer side.

Note that the resin-covered cord 82 is formed such that an obtuse angle β between the one side face 82A and the side face 82C adjacent to this side face 82A is a supplementary angle of the angle of inclination α (acute angle α) (namely, α + β = 180°). Note that although the resin-covered cord 82 has a parallelogram shaped cross-section profile and an obtuse angle between the side face 82B and the side face 82D is the same as the angle β in the second exemplary embodiment, the angle between the side face 82B and the side face 82D may be different from the angle β. Moreover, the lengths of the side face 82A and the side face 82B of the resin-covered cord 82 may be different from each other.

In the belt 80 employing the resin-covered cord 82 configured in this manner, the resin-covered cord 82 is wound in a spiral pattern such that the side face 82A is tilted by the angle of inclination α with respect to the tire axial direction. Thus, in the belt 80, the side face 82C of the resin-covered cord 82 forms a contiguously extending substantially straight line, and the side face 82B of the resin-covered cord 82 contacts the side face 82A at adjacent portions of the resin-covered cord 82.

Thus, the side faces 82C, 82D of the resin-covered cord 82 of the belt 80 both form substantially straight lines (are substantially flat), and the task of winding the resin-covered cord 82 in a spiral pattern with the array direction of the reinforcing cords 36 inclined with respect to the tire axial direction is facilitated. Moreover, since the tire radial direction inner side of the belt 80 is substantially flat, the joining properties and the level of joining of the belt 80 can be improved, facilitating joining to the carcass ply 22.

Moreover, in the belt 80, substantially the entire surface of the side face 82B of the resin-covered cord 82 overlaps with the adjacent side face 82A of the resin-covered cord 82 to form a joined portion 84. This enables the joining surface area (surface area of the joined portion 84) between adjacent portions of the resin covered cord 82 of the belt 80 to be increased, enabling the joining properties to be improved, and enabling the level of joining of the resin-covered cord 82 to be improved. Moreover, the resin-covered cord 82 is inclined at the angle of inclination $\alpha$, and by setting the angle of inclination $\alpha$ from 30° to 70°, the weld strength of the resin-covered cord 82 can be effectively improved, and the resin-covered cord 82 joining properties can be effectively improved. This enables the durability of the belt 80 that employs the resin-covered cord 82 to be improved, thereby enabling the durability of the tire 10 provided with the belt 80 to be improved.

The entire content of the disclosure of Japanese Patent Application No. 2018-116393 filed on June 20, 2018 is incorporated by reference in the present specification.

All cited documents, patent applications, and technical standards mentioned in the present specification are incorporated by reference in the present specification to the same extent as if each individual cited document, patent application, or technical standard was specifically and individually indicated to be incorporated by reference.

## Claims

1. A tire, comprising:

a belt joined to an outer circumference of a circular tire frame member, the belt being formed with a resin-covered cord that is wound in a spiral pattern, in a tire circumferential direction, onto the outer circumference of the tire frame member, and the resin-covered cord being configured by an arrangement of a plurality of reinforcing cords that are covered with a thermoplastic resin,
in a cross-section of the belt sectioned along a tire axial direction, the resin-covered cord being wound in the spiral pattern with an array direction of the reinforcing cord being inclined with respect to the tire axial direction, and portions of the inclined resin-covered cord that are adjacent to each other in the tire axial direction being welded together at mutual contact portions.

2. The tire of claim 1, wherein, in a cross-section of the resin-covered cord sectioned along the tire axial direction, an angle of inclination of a face, on a tire frame member side, of the resin-covered cord with respect to the array direction of the reinforcing cords configures a supplementary angle to an angle of the array direction of the reinforcing cords with respect to the tire axial direction.

FIG.1

FIG.2

FIG.3

EP 3 812 171 A1

FIG.4

13

# FIG.5

FIG.6

EP 3 812 171 A1

## INTERNATIONAL SEARCH REPORT

| International application No. |
| --- |
| PCT/JP2019/023762 |

**A. CLASSIFICATION OF SUBJECT MATTER**
Int.Cl. B60C9/20(2006.01)i, B60C1/00(2006.01)i, B60C9/18(2006.01)i,
    B60C9/22(2006.01)i

According to International Patent Classification (IPC) or to both national classification and IPC

**B. FIELDS SEARCHED**

Minimum documentation searched (classification system followed by classification symbols)
Int.Cl. B60C1/00, B60C9/18-9/22

| Documentation searched other than minimum documentation to the extent that such documents are included in the fields searched | |
| --- | --- |
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2002-154307 A (BRIDGESTONE CORPORATION) 28 May 2002, entire text, all drawings (Family: none) | 1-2 |
| A | JP 2006-213248 A (THE YOKOHAMA RUBBER CO., LTD.) 17 August 2006, entire text, all drawings (Family: none) | 1-2 |
| A | JP 2007-308101 A (SUMITOMO RUBBER INDUSTRIES, LTD.) 29 November 2007, entire text, all drawings & US 2008/0017290 A1 & EP 1859961 A2 | 1-2 |

☒ Further documents are listed in the continuation of Box C.    ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 05 August 2019 (05.08.2019) | 20 August 2019 (20.08.2019) |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

**INTERNATIONAL SEARCH REPORT**

| | International application No. |
|---|---|
| | PCT/JP2019/023762 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-55906 A (SUMITOMO RUBBER INDUSTRIES, LTD.) 01 March 1994, entire text, all drawings (Family: none) | 1-2 |
| A | JP 4-355121 A (BRIDGESTONE CORPORATION) 09 December 1992, entire text, all drawings (Family: none) | 1-2 |
| A | WO 2018/074197 A1 (BRIDGESTONE CORPORATION) 26 April 2018, entire text, all drawings & JP 2018-65426 A | 1-2 |
| A | WO 2008/102048 A1 (NOKIAN RENKAAT OYJ) 28 August 2008, entire text, all drawings (Family: none) | 1-2 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014210487 A

- JP 2018116393 A

**Non-patent literature cited in the description**

- Japan Automobile Tire Manufacturers Association (JATMA). 2018